# EUROPEAN PATENT APPLICATION

(11) **EP 4 831 444 A1**
(43) Date of publication of application: **28.10.2026**
(21) Application number: 26164436.3
(22) Date of filing: 12.03.2026
(51) Int. Cl.: F01D 5/20, F01D 5/18

(54) **TURBINE BLADE FOR A GAS TURBINE ENGINE**

(30) Priority: 12.03.2025 US 202519077878
(71) Applicant: RTX Corporation, Farmington, CT 06032 (US)
(72) Inventor: GAMBARDELLA, David E., Tucson, 85748 (US); SPANGLER, Brandon W., Vernon, 06066 (US); MONGILLO JR., Dominic J., West Hartford, 06107 (US); GHIGLIOTTY ROSADO, Jaime G., Cabo Rojo, 00623 (US); HARRINGTON, John, Columbia, 06237 (US); VU, Tyler, Berlin, 06037 (US); SIMPSON, Benjamin B., Rogersville, 37857 (US)
(74) Representative: Dehns

(57) **Abstract**

A blade for a gas turbine engine (22) includes an airfoil body (68) configured for rotation about a rotational axis (40). The airfoil body (68) includes a pressure side wall (76), a suction side wall (78), and a tip end wall (130). The airfoil body (68) forms pressure side wall passages (90) and a tip plenum (134). The pressure side wall (76) includes an exterior wall segment (92) and an interior wall segment (94). The pressure side wall (76) forms the pressure side wall passages (90) between the exterior wall segment (92) and the interior wall segment (94). The interior wall segment (94) contacts the exterior wall segment (92) at an outer radial wall end (106) of the interior wall segment (94) enclosing the pressure side wall passages (90). The exterior wall segment (92) extends from the outer radial wall end (106) to the tip end wall (130) forming a radial wall portion (144). The radial wall portion (144), the suction side wall (78), and the tip end wall (130) form the tip plenum (134) along the tip end wall (130).

## Description

### Technical Field

This disclosure relates generally to gas turbine engines for aircraft propulsion systems and, more particularly, to turbine blades for a turbine section of a gas turbine engine.

### Background Information

A gas turbine engine typically includes a turbine section. The turbine section may include one or more turbines such as, but not limited to, a low-pressure turbine and a high-pressure turbine. These turbines may include multiple stages of blades and vanes. As fluid flows through the turbine section, the flow causes the blades to rotate about an axis of rotation. Temperatures within the turbine section may be relatively high, as the flow of fluid is received initially from a combustor of the gas turbine engine. Cooling air may be extracted from a compressor section of the gas turbine engine and used to cool the gas path components, for example, the blades of the turbines. Various turbine blade configurations are known in the art for mitigating the impact of high turbine section temperatures on turbine blade materials. While these known turbine blade configurations may be suitable for their intended purposes, there is always room in the art for improvement.

### SUMMARY

According to an aspect of the present invention, a blade for a gas turbine engine includes an airfoil body configured for rotation about a rotational axis of the gas turbine engine. The airfoil body includes a pressure side wall, a suction side wall, and a tip end wall. The pressure side wall and the suction side wall extend between and to a leading edge of the airfoil body and a trailing edge of the airfoil body. The pressure side wall forms a pressure side surface. The suction side wall forms a suction side surface. The tip end wall forms a blade tip at an outer radial body end of the airfoil body. The airfoil body forms a plurality of pressure side wall passages, a main body cavity, and a tip plenum. The pressure side wall includes an exterior wall segment and an interior wall segment. The pressure side wall forms the plurality of pressure side wall passages between the exterior wall segment and the interior wall segment. The interior wall segment contacts the exterior wall segment at an outer radial wall end of the interior wall segment enclosing the plurality of pressure side wall passages. The interior wall segment forms a rim at the outer radial wall end. The interior wall segment and the suction side wall form the main body cavity. The exterior wall segment extends from the rim to the tip end wall forming a radial wall portion of the exterior wall segment. The radial wall portion, the suction side wall, and the tip end wall form the tip plenum along the tip end wall. The tip plenum is disposed radially outward of the rim and the main body cavity. The tip plenum is connected in fluid communication with the main body cavity.

In an embodiment of the above, the main body cavity may be isolated from fluid communication with the pressure side wall passages.

In an embodiment according to any of the previous embodiments, the radial wall portion may form a plurality of cooling holes extending through the radial wall portion from the tip plenum to the pressure side surface.

In an embodiment according to any of the previous embodiments, the plurality of cooling holes may be arranged as a plurality of radial rows of the plurality of cooling holes on the radial wall portion.

In an embodiment according to any of the previous embodiments, the rim may form a convex segment further forming the tip plenum.

In an embodiment according to any of the previous embodiments, the interior wall segment may extend between and to an upstream end and a downstream end, and the interior wall segment may form the rim from the upstream end to the downstream end.

In an embodiment according to any of the previous embodiments, the tip end wall may form a squealer pocket on the tip end, and the squealer pocket may be connected in fluid communication with the tip plenum.

In an embodiment according to any of the previous embodiments, the radial wall portion may include a plurality of flow augmentation features projecting into the tip plenum.

In an embodiment according to any of the previous embodiments, the tip plenum may extend along the tip end wall to an outlet formed through the trailing edge.

In an embodiment according to any of the previous embodiments, the airfoil body may further form a leading edge cavity between the leading edge and the main body cavity, the leading edge cavity may be connected in fluid communication with the tip plenum, and the tip plenum may extend along the tip end wall from the leading edge cavity to the outlet.

In an embodiment according to any of the previous embodiments, the radial wall portion may extend radially at least 0.100 inches (2.54 mm) in the radial direction between the outer radial end (e.g., the rim) and the tip end wall.

According to another aspect of the present invention, a gas turbine engine includes a turbine section. The turbine section includes a bladed turbine rotor mounted for rotation about a rotational axis. The bladed turbine rotor includes a plurality of turbine blades. Each of the turbine blades includes an airfoil body. The airfoil body includes a pressure side wall, a suction side wall, and a tip end wall. The pressure side wall and the suction side wall extend between and to a leading edge of the airfoil body and a trailing edge of the airfoil body. The pressure side wall forms a pressure side surface. The suction side wall forms a suction side surface. The tip end wall forms a blade tip at an outer radial body end of the airfoil body. The airfoil body forms a plurality of pressure side wall passages, a main body cavity, and a tip plenum. The pressure side wall forms the plurality of pressure side wall passages within the pressure side wall and between the pressure side surface and the main body cavity. The plurality of pressure side wall passages are isolated from fluid communication with the main body cavity. The pressure side wall and the suction side wall form the main body cavity. The pressure side wall includes a radial wall portion extending between and to the pressure side wall passage and the tip end wall. The radial wall portion, the suction side wall, and the tip end wall form the tip plenum along the tip end wall. The tip plenum is disposed radially outward of the rim and the main body cavity. The tip plenum is connected in fluid communication with the main body cavity. The radial wall portion forms a plurality of cooling holes extending through the radial wall portion from the tip plenum to the pressure side surface.

In an embodiment of the above, the plurality of cooling holes are arranged as a plurality of radial rows of the plurality of cooling holes on the radial wall portion.

In an embodiment according to any of the previous embodiments, the tip end wall may form a squealer pocket on the tip end, and the tip end wall may further form at least one air passage extending through the tip end wall from the tip plenum to the squealer pocket.

In an embodiment according to any of the previous embodiments, the radial wall portion may extend radially at least 0.100 inches (2.54 mm).

In an embodiment according to any of the previous embodiments, the radial wall portion may include a plurality of flow augmentation features projecting into the tip plenum.

In an embodiment according to any of the previous embodiments, the tip plenum may extend along the tip end wall to an outlet formed through the trailing edge.

In an embodiment according to any of the previous embodiments, the airfoil body may further form a leading edge cavity between the leading edge and the main body cavity, the leading edge cavity may be connected in fluid communication with the tip plenum, and the tip plenum may extend along the tip end wall from the leading edge cavity to the outlet.

According to another aspect of the present invention, a method for cooling a tip of an airfoil body of a blade of a gas turbine engine includes directing cooling air from a tip plenum of the airfoil body through a plurality of cooling holes to an exterior of the airfoil body. The airfoil body includes a pressure side wall, a suction side wall, and a tip end wall. The pressure side wall and the suction side wall form a main body cavity therebetween. The pressure side wall forms a plurality of pressure side wall passages. The suction side wall forms a plurality of suction side wall passages. The pressure side wall passages and the suction side wall passages are isolated from fluid communication with the main body cavity. The pressure side wall includes a radial wall portion extending between the pressure side wall passages and the tip end wall. The radial wall portion, the suction side wall, and the tip end wall form the tip plenum. The tip plenum is connected in fluid communication with the main body cavity. The radial wall portion forms the plurality of cooling holes.

In an embodiment of the above, the pressure side wall may form a rim at the main body cavity and the tip plenum, the rim may include a convex segment projecting into and further forming the tip plenum, and the plurality of cooling holes may be disposed between the rim and the tip end wall.

In an embodiment according to any of the previous embodiments, the method may further include directing the cooling air from the tip plenum to a squealer pocket formed by the tip end wall at a blade tip of the blade.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates an aircraft including propulsion systems, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates a cutaway, side view of a portion of a turbine section of the gas turbine engine, in accordance with one or more embodiments of the present disclosure.
FIG. 4 illustrates a cross-sectional view of a turbine blade of the turbine section taken along Line 4-4 of FIG. 3, in accordance with one or more embodiments of the present disclosure.
FIG. 5 illustrates a cutaway, side view of the turbine blade taken primarily along Line 5-5 of FIG. 4, in accordance with one or more embodiments of the present disclosure.
FIG. 6 illustrates another cutaway, side view of the turbine blade taken primarily along Line 6-6 of FIG. 4, in accordance with one or more embodiments of the present disclosure.
FIG. 7 illustrates a cross-sectional view of a portion of the turbine blade taken along Line 7-7 of FIG. 3, in accordance with one or more embodiments of the present disclosure.
FIG. 8 illustrates a cutaway view of a portion of another turbine blade, in accordance with one or more embodiments of the present disclosure.

### DETAILED DESCRIPTION

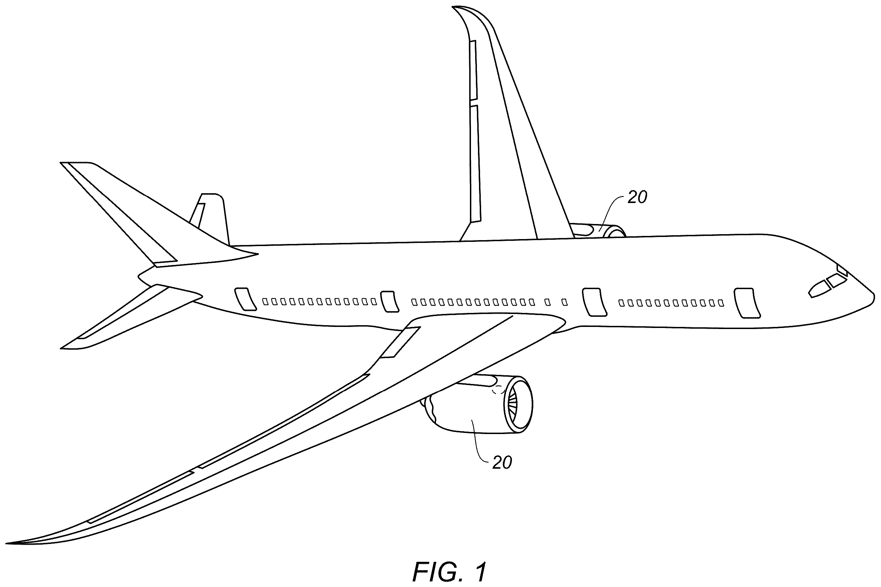

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

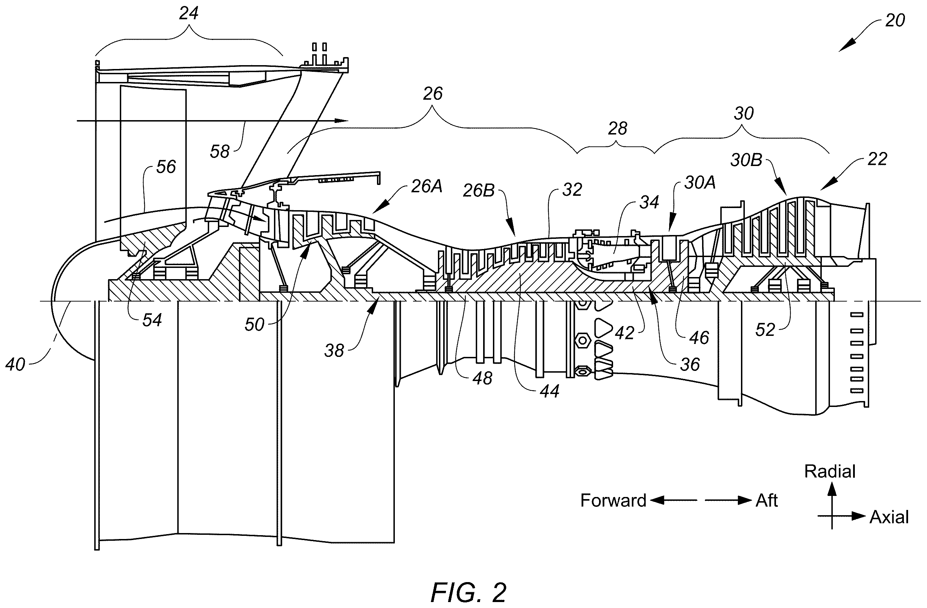

FIG. 2 schematically illustrates a cutaway, side view of the propulsion system 20. The propulsion system 20 includes a gas turbine engine 22. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 22 of FIG. 2 includes a fan section 24, a compressor section 26, a combustor section 28, a turbine section 30, and an engine static structure 32. The compressor section 26 includes a low-pressure compressor (LPC) 26A and a high-pressure compressor (HPC) 26B. The combustor section 28 includes a combustor 34 (e.g., an annular combustor). The turbine section 30 includes a high-pressure turbine (HPT) 30A and a low-pressure turbine (LPT) 32B.

Components of the fan section 24, the compressor section 26, and the turbine section 30 form a first rotational assembly 36 (e.g., a high-pressure spool) and a second rotational assembly 38 (e.g., a low-pressure spool) of the gas turbine engine 22. The first rotational assembly 36 and the second rotational assembly 38 are mounted for rotation about a rotational axis 40 (e.g., an axial centerline) of the gas turbine engine 22 relative to the engine static structure 32.

The first rotational assembly 36 includes a first shaft 42, a bladed first compressor rotor 44 for the high-pressure compressor 26B, and a bladed first turbine rotor 46 for the high-pressure turbine 30A. The first shaft 42 interconnects the bladed first compressor rotor 44 and the bladed first turbine rotor 46.

The second rotational assembly 38 includes a second shaft 48, a bladed second compressor rotor 50 for the low-pressure compressor 26A, a bladed second turbine rotor 52 for the low-pressure turbine 30B, and a bladed fan rotor 54 for the fan section 24. The second shaft 48 of FIG. 2 interconnects the bladed second compressor rotor 50, the bladed second turbine rotor 52, and the bladed fan rotor 54. The bladed fan rotor 54 may alternatively be connected to the second shaft 48 by a gear train (e.g., a reduction gear assembly) configured to drive rotation of the bladed fan rotor 54 at a different rotational speed than the second shaft 48. The first shaft 42 and the second shaft 48 are concentric and configured to rotate about the rotational axis 40. The present disclosure, however, is not limited to concentric configurations of the first shaft 42 and the second shaft 48.

The engine static structure 32 may include one or more engine cases, cowlings, bearing assemblies, and/or other non-rotating structures configured to house and/or support (e.g., rotationally support) components of the gas turbine engine 22 sections 24, 26, 28, 30.

In operation of the gas turbine engine 22 of FIG. 2, ambient air is directed through the fan section 24 and into a core flow path 56 (e.g., an annular flow path) and a bypass flow path 58 (e.g., an annular flow path) facilitated by rotation of the bladed fan rotor 54. Airflow along the core flow path 56 is compressed by the low-pressure compressor 26A and the high-pressure compressor 26B, mixed and burned with fuel in the combustor 34, and then directed through the high-pressure turbine 30A and the low-pressure turbine 30B. The bladed first turbine rotor 46 and the bladed second turbine rotor 52 rotationally drive the first rotational assembly 36 and the second rotational assembly 38, respectively, in response to the combustion gas flow through the high-pressure turbine 30A and the low-pressure turbine 30B. The bypass flow path 58 may be disposed outside the engine static structure 32. For example, the engine static structure 32 and an outer aircraft propulsion system housing (e.g., a nacelle) may form an annular bypass duct radially therebetween, and airflow may be directed through the annular bypass duct along the bypass flow path 58.

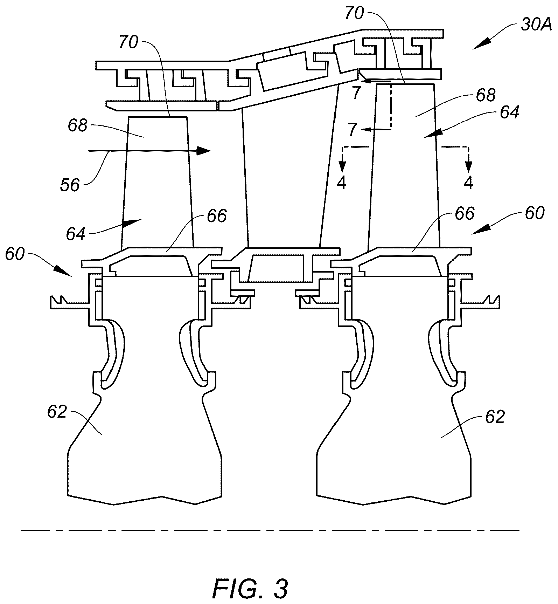

FIG. 3 schematically illustrates a cutaway, side view of a portion of the high-pressure turbine section 30A showing the core flow path 56 and a portion of the bladed first turbine rotor 46. While aspects of the present disclosure will be explained with respect to the high-pressure turbine section 30A and the bladed first turbine rotor 46, the present disclosure is not limited in applicability to a high-pressure turbine section of a gas turbine engine. The bladed first turbine rotor 46 includes one or more rotor stages 60 (e.g., axially arrayed rotor stages). Each of the rotor stages 60 includes a rotor disk 62 and a plurality of turbine blades 64 disposed on and circumferentially distributed about the rotor disk 62. Each of the turbine blades 64 includes a platform 66 and an airfoil body 68. The platform 66 forms an inner radial boundary of the core flow path 56. The airfoil body 68 extends radially outward from the platform 66 to a blade tip 70 (e.g., in a spanwise direction) of the respective one of the turbine blades 64.

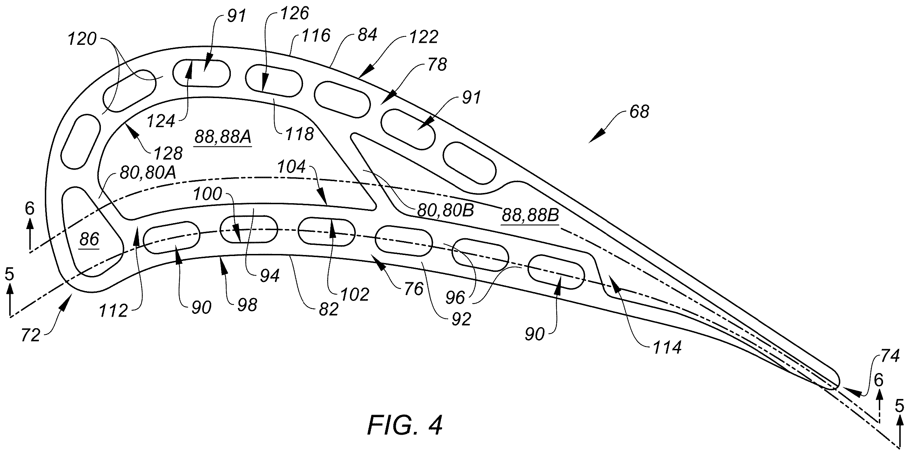

FIG. 4 illustrates the airfoil body 68 taken along Line 4-4 of FIG. 3. The airfoil body 68 extends (e.g., in a chordwise direction) between and to a leading edge 72 of the airfoil body 68 and a trailing edge 74 of the airfoil body 68. The airfoil body 68 includes a pressure side wall 76, a suction side wall 78, and one or more ribs 80. The pressure side wall 76 and the suction side wall 78 extend between and to the leading edge 72 and the trailing edge 74. The leading edge 72, the trailing edge 74, the pressure side wall 76, and the suction side wall 78 may extend between and to the platform 66 and the blade tip 70. The pressure side wall 76 forms a pressure side surface 82 (e.g., an exterior surface) of the airfoil body 68. The suction side wall 78 forms a suction side surface 84 (e.g., an exterior surface) of the airfoil body 68. The ribs 80 extend between and connect the pressure side wall 76 and the suction side wall 78. The airfoil body 68 (e.g., the pressure side wall 76, the suction side wall 78, and the ribs 80) form a plurality of internal cavities which include a leading edge cavity 86, one or more main body cavities 88, a plurality of pressure side wall passages 90, and a plurality of suction side wall passages 91. The airfoil body 68 may form a single main body cavity 88 or, as shown in FIG. 4 for example, at least two main body cavities 88 including a first main body cavity 88A and a second main body cavity 88B. These cavities 86, 88 and passages 90, 91 supplied with cooling air (e.g., compressor bleed air) at an inner radial end of the airfoil body 68.

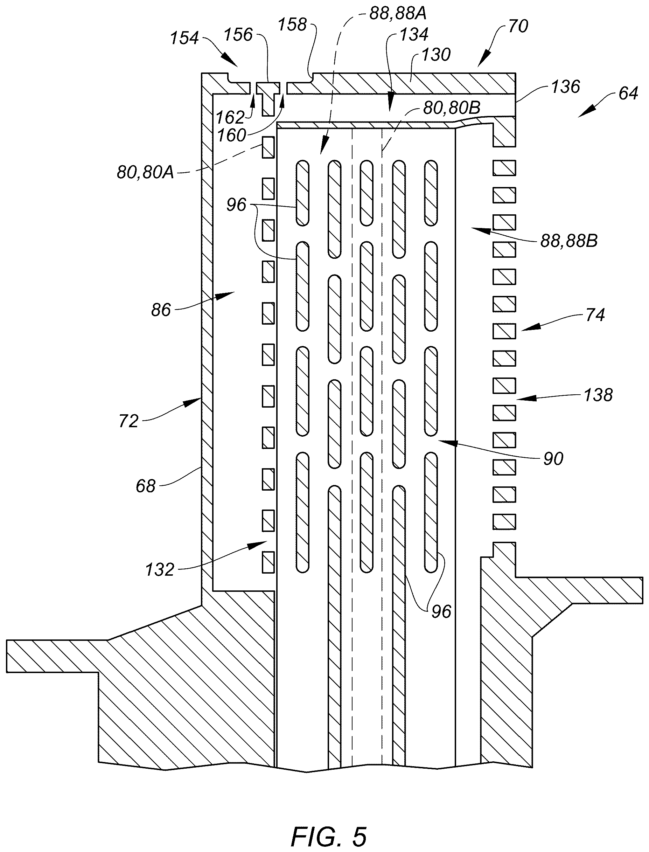

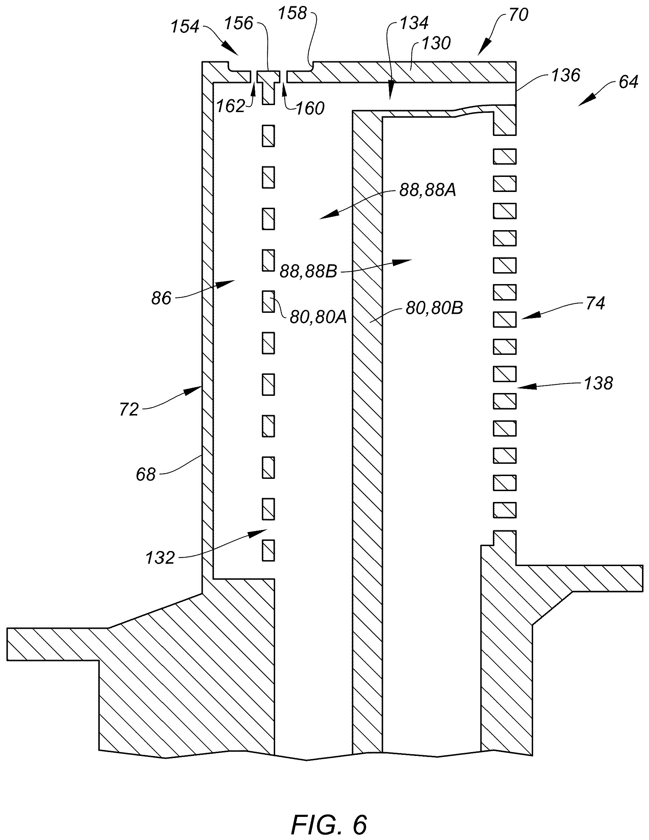

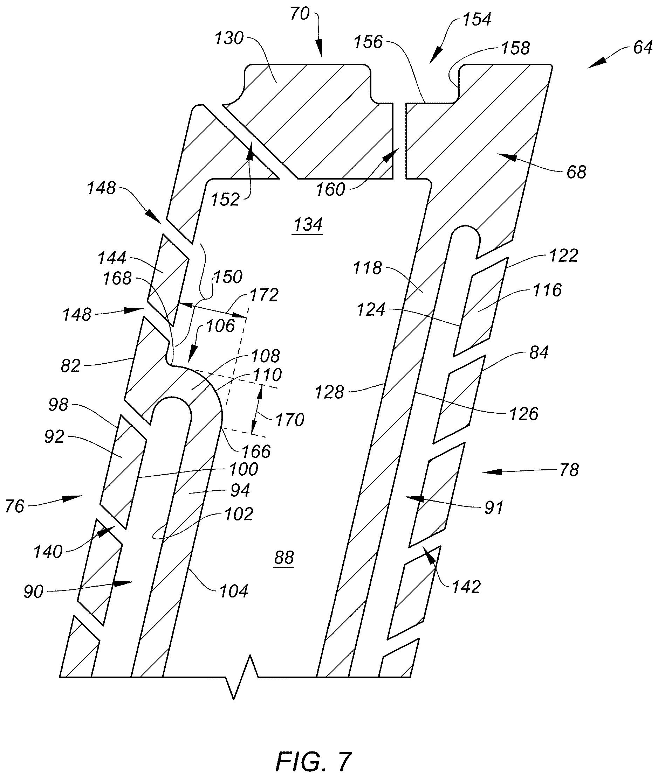

With additional reference to FIGS. 5-7, the airfoil body 68 is shown in greater detail. FIG. 5 illustrates a cutaway, side view of the airfoil body 68 showing the pressure side wall passages 90 in front of the main body cavities 88, 88A-B. FIG. 6 illustrates a cutaway, side view of the airfoil body 68 with the pressure side wall passages 90 omitted to more clearly show the main body cavities 88, 88A-B. FIG. 7 illustrates a cross-sectional view of the airfoil body 68 taken along Line 7-7 of FIG. 5.

The pressure side wall 76 includes an exterior wall segment 92, an interior wall segment 94, and a plurality of ribs 96. The exterior wall segment 92 extends between and to an outer side 98 of the exterior wall segment 92 and an inner side 100 of the exterior wall segment 92. The exterior wall segment 92 extends radially outward (e.g., from the platform 66) to and contacts a tip end wall 130 of the airfoil body 68 forming the blade tip 70. The outer side 98 forms the pressure side surface 82. The interior wall segment 94 extends between and to an outer side 102 of the interior wall segment 94 and an inner side 104 of the interior wall segment 94. The inner side 104 forms portions of the main body cavities 88. As shown in FIG. 7, the interior wall segment 94 extends radially along the exterior wall segment 92 to an outer radial end 106 of the interior wall segment 94 disposed radially inward of the tip end wall 130. The interior wall segment 94 contacts the exterior wall segment 92 (e.g., the inner side 100) at (e.g., on, adjacent, or proximate) the outer radial end 106. The interior wall segment 94 forms a rim 108 at (e.g., on, adjacent, or proximate) the outer radial end 106. The rim 108 is disposed at (e.g., on, adjacent, or proximate) an outer radial end of the main body cavities 88. The rim 108 is characterized by a curvature (e.g., a partial-circular curvature) where the interior wall segment 94 intersects the exterior wall segment 92 (e.g., the inner side 100) and forms a convex segment 110 along the inner side 104 at (e.g., on, adjacent, or proximate) the outer radial end 106. The convex segment 110 extends (e.g., convexly) along the interior wall segment 94 from an inner end 166 to an outer end 168 (e.g., where the interior wall segment 94 intersects the exterior wall segment 92). The convex segment 110 may be formed by a curved surface of the interior wall segment 94 at the outer radial end 106. Alternatively, the convex segment 110 may be formed by a plurality of surface faces arranged between the inner end 166 and the outer end 168. The convex segment 110 may additionally include fillets between the surface faces to further smooth the transition of the convex segment 110 from the inner end 166 to the outer end 168. The present disclosure, however, is not limited to the foregoing exemplary configurations of the convex segment 110. The convex segment 110 may additionally have a height 170 and a width 172 each extending between the inner end 166 and the outer end 168. The height 170 may extend generally radially between the inner end 166 and the outer end 168, for example, in a lengthwise direction of the pressure side wall 76. The width 172 may extend generally orthogonal to the height 170, for example, in a thickness direction of the pressure side wall 76. The height 170 of the convex segment 110 may be between about 1 and about 4 times the width 172 to facilitate the smooth transition of air travelling from the main body passages 88 to the radial wall portion 144. The rim 108 and its convex segment 110 may extend (e.g., in the chordwise direction) along all or a substantial portion of the interior wall segment 94 between a leading end 112 of the interior wall segment 94 and a trailing end 114 of the interior wall segment 94. The height 170 and/or the width 172 may vary along a length of the rim 108 from the leading end 112 to the trailing end 114. The rim 108 forms and encloses an outer radial end of the pressure side wall passages 90. The ribs 96 extend lengthwise (e.g., continuously or segmented) between and connect the exterior wall segment 92 (e.g., the inner side 100) and the interior wall segment 94 (e.g., the outer side 102). The ribs 96 are oriented lengthwise primarily in the radial direction.

The exterior wall segment 92, the interior wall segment 94, and the ribs 96 form the pressure side wall passages 90. The pressure side wall passages 90 are formed by and between the exterior wall segment 92 (e.g., the inner side 100) and the interior wall segment 94 (e.g., the outer side 102). The ribs 96 are disposed between and separate the pressure side wall passages 90 (e.g., adjacent pressure side wall passages 90). The ribs 96 may be segmented (e.g., discontinuous) in the radial direction, as shown in FIG. 5, to facilitate fluid communication between the pressure side wall passages 90. The pressure side wall passages 90 extend radially from an inner radial end of the airfoil body 68 to the outer radial end 106 (e.g., the rim 108). The exterior wall segment 92 forms a plurality of pressure side cooling holes 140 extending through the exterior wall segment 92 from the pressure side wall passages 90 to the pressure side surface 82. The pressure side wall passages 90 are isolated from fluid communication with the main body cavities 88 through the airfoil body 68.

The suction side wall 78 includes an exterior wall segment 116, an interior wall segment 118, and a plurality of ribs 120. The exterior wall segment 116 extends between and to an outer side 122 of the exterior wall segment 116 and an inner side 124 of the exterior wall segment 116. The outer side 122 forms the suction side surface 84. The interior wall segment 118 extends between and to an outer side 126 of the interior wall segment 118 and an inner side 128 of the interior wall segment 118. The inner side 128 forms portions of the main body cavities 88. As shown in FIG. 7, the exterior wall segment 116 and the interior wall segment 118 extends radially outward to and contact the tip end wall 130. The ribs 120 extend between and connect the exterior wall segment 116 (e.g., the inner side 124) and the interior wall segment 118 (e.g., the outer side 126). Similar to the ribs 96, the ribs 120 may be oriented lengthwise primarily in the radial direction. The exterior wall segment 116, the interior wall segment 118, and the ribs 120 form the suction side wall passages 91. The suction side wall passages 91 are formed by and between the exterior wall segment 116 (e.g., the inner side 124) and the interior wall segment 118 (e.g., the outer side 126). The ribs 120 are disposed between and separate the suction side wall passages 91 (e.g., adjacent suction side wall passages 91). Similar to the ribs 96, the ribs 120 may be segmented (e.g., discontinuous) in the radial direction to facilitate fluid communication between the suction side wall passages 91. The suction side wall passages 91 extend radially from an inner radial end of the airfoil body 68 to the tip end wall 130. The exterior wall segment 116 forms a plurality of suction side cooling holes 142 extending through the exterior wall segment 116 from the suction side wall passages 91 to the suction side surface 84. The suction side wall passages 91 are isolated from fluid communication with the main body cavities 88 through the airfoil body 68.

The first main body cavity 88A is formed by and between the ribs 80, the interior wall segment 94 (e.g., the inner side 104), and the interior wall segment 118 (e.g., the inner side 128). In particular, the first main body cavity 88A may be formed between a first rib 80A of the ribs 80 and a second rib 80B of the ribs 80. The first main body cavity 88A may be separated from the second main body cavity 88B by the second rib 80B. The first rib 80A may form a plurality of passages 132 connecting the first main body cavity 88A in fluid communication with the leading edge cavity 86. The first main body cavity 88A extends radially from an inner radial end of the airfoil body 68 to the tip end wall 130. The first main body cavity 88A extends to and is connected in fluid communication with a tip plenum 134 (or a "tip flag") at an outer radial end of the body cavity 88A and/or the body cavities 88. The airfoil body 68 forms the tip plenum 134 extending along the tip end wall 130 from at least the first rib 80A to the trailing edge 74. The tip plenum 134 is disposed radially between the tip end wall 130 and the pressure side wall passages 90 and the second main body cavity 88B. The tip plenum 134 may include an outlet 136 formed by the airfoil body 68 through the trailing edge 74. The tip plenum 134 may be connected in fluid communication with the leading edge cavity 86 and/or the second main body cavity 88B.

The second main body cavity 88B may be formed by and between the ribs pressure side wall 76, the suction side wall 78, and the ribs 80 (e.g., the second rib 80B). The second main body cavity 88B may extend between and to the second rib 80B and the trailing edge 74. The airfoil body 68 may form a plurality of trailing edge cooling holes 138 of the second main body cavity 88B at (e.g., on, adjacent, or proximate) the trailing edge 74. The trailing edge cooling holes 138 may be arrayed radially along the trailing edge 74.

Referring to FIG. 7, the exterior wall segment 92 includes a radial wall portion 144 extending (e.g., radially extending) between and to the outer radial end 106 and the tip end wall 130. The radial wall portion 144 extends between and to the pressure side surface 82 (e.g., the outer side 98) and the inner side 100. The radial wall portion 144 extends (e.g., radially extends) between and to the rim 108 and the tip end wall 130. The rim 108 (e.g., the convex segment 110) projects into and forms the tip plenum 134, for example, at an interface between the main body cavities 88 and the tip plenum 134. The inner side 100 along the radial wall portion 144 forms the tip plenum 134. The radial wall portion 144 forms a plurality of tip plenum cooling holes 148 extending through the radial wall portion 144 from the tip plenum 134 to the pressure side surface 82. The tip plenum cooling holes 148 may be arranged on the radial wall portion 144 as a plurality of radial rows 150 of the tip plenum cooling holes 148. To facilitate incorporation of these tip plenum cooling holes 148 in the radial wall portion 144, the radial wall portion 144 may extend at least 0.100 inches (2.54 mm) in the radial direction between the outer radial end 106 (e.g., the rim 108) and the tip end wall 130. The tip end wall 130 may also form a plurality of tip plenum cooling holes 152 extending through the tip end wall 130 from the tip plenum 134 to an exterior of the airfoil body 68, for example, at (e.g., on, adjacent, or proximate) the blade tip 70 and/or the pressure side surface 82.

The airfoil body 68 directs cooling air from the main body cavities 88 into and through the tip plenum 134 to facilitate cooling of the airfoil body 68 proximate the blade tip 70. This cooling air from the main body cavities 88 may typically be cooler than the air fed through the pressure side wall passages 90 and the suction side wall passages 91 for cooling the pressure side wall 76 and the suction side wall 78, respectively, and so may facilitate reduced blade tip 70 temperatures relative to at least some conventional turbine blade airfoil configurations including single concave (e.g., pressure side) and convex (e.g., suction side) exterior wall turbine blade airfoil cooling configurations, which may incur increased cooling air temperature heat pickup due to the hotter interior surface temperatures of the external pressure side wall and/or suction side exterior walls. As such, the hotter cooling air temperature of these conventional configurations reduces the thermal cooling potential resulting in hotter blade tip metal temperatures. Conversely the present disclosure enables a significant reduction in the cooling air temperature heat pickup provided to the tip plenum 134, resulting from the insulation of the main body cavities 88, which are shielded by the peripheral pressure side cooling passages 90 and suction side cooling passages 91. The colder cooling air temperature in the tip plenum 134 is directed across the radial wall portion 144 and nearly the entire tip end wall 130 and through the outlet 136, preventing stagnating or low-momentum air flow proximate the blade tip 70, thereby facilitating improved airfoil body 68 cooling at the blade tip 70 and on the pressure side wall 76 proximate the blade tip 70. Cooling air directed from the tip plenum 134 through the tip plenum cooling holes 148 provides film cooling to the exterior of the airfoil body 68 at the interface of the pressure side surface 82 and the tip end wall 130. The curvature of the rim 108 (e.g., the convex segment 110) and smooth transition of cooling air from the radially-oriented main body cavity 88A to the tip plenum 134 (e.g., the chordwise-oriented tip plenum) by the rim 108 facilitates reductions in flow separation and pressure drop for air travelling from the main body passages 88 to the radial wall portion 144.

Referring to FIGS. 5-7, in some embodiments, the tip end wall 130 may form a squealer pocket 154 on the blade tip 70 to further facilitate cooling at the blade tip 70. In particular, the tip end wall 130 forms a bottom side 156 and a perimeter side 158 of the squealer pocket 154. The bottom side 156 is recessed from (e.g., disposed radially inward of) the blade tip 70. The perimeter side 158 may extend between and to the blade tip 70 and the bottom side 156. The squealer pocket 154 is connected in fluid communication with the leading edge cavity 86 and/or the main body cavities 88. For example, the tip end wall 130 may form one or more air passages 160 extending between and to the tip plenum 134 and the squealer pocket 154 (e.g., the bottom side 156). Additionally or alternatively, for example, the tip end wall 130 may form one or more air passages 162 extending between and to the leading edge cavity 86 and the squealer pocket 154 (e.g., the bottom side 156).

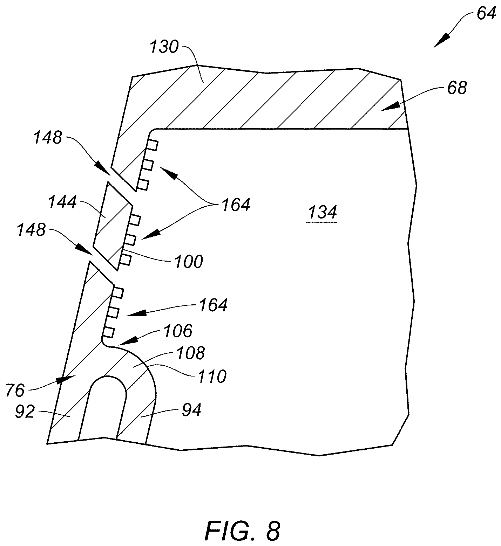

Referring to FIG. 8, in some embodiments, the radial wall portion 144 may include a plurality of flow augmentation features 164. The flow augmentation features 164 include trip strips, pin fins, and/or other structural features which project outward from the radial wall portion 144 (e.g., the inner side 100) into the tip plenum 134. The flow augmentation features 164 facilitate turbulation of air flow through the tip plenum 134 along the radial wall portion 144 (e.g., the inner side 104), thereby improving heat transfer from the airfoil body 68 at (e.g., on, adjacent, or proximate) the radial wall portion 144 to cooling air flow through the tip plenum 134. To facilitate incorporation of these flow augmentation features 164 on the radial wall portion 144, the radial wall portion 144 may extend at least 0.080 inches (2.032 mm) in the radial direction between the outer radial end 106 (e.g., the rim 108) and the tip end wall 130.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A blade (64) for a gas turbine engine (22), the blade (64) comprising:
an airfoil body (68) configured for rotation about a rotational axis (40) of the gas turbine engine (22), the airfoil body (68) including a pressure side wall (76), a suction side wall (78), and a tip end wall (130), the pressure side wall (76) and the suction side wall (78) extending between and to a leading edge (72) of the airfoil body (68) and a trailing edge (74) of the airfoil body (68), the pressure side wall (76) forming a pressure side surface (82), the suction side wall (78) forming a suction side surface (84), the tip end wall (130) forming a blade tip (70) at an outer radial body end of the airfoil body (68), the airfoil body (68) forming a plurality of pressure side wall passages (90), a main body cavity (88, 88A, 88B), and a tip plenum (134),
the pressure side wall (76) including an exterior wall segment (92) and an interior wall segment (94), the pressure side wall (76) forming the plurality of pressure side wall passages (90) between the exterior wall segment (92) and the interior wall segment (94), the interior wall segment (94) contacting the exterior wall segment (92) at an outer radial wall end (106) of the interior wall segment (94) enclosing the plurality of pressure side wall passages (90), the interior wall segment (94) forming a rim (108) at the outer radial wall end (106),
the interior wall segment (94) and the suction side wall (78) forming the main body cavity (88, 88A, 88B), and
the exterior wall segment (92) extending from the rim (108) to the tip end wall (130) forming a radial wall portion (144) of the exterior wall segment (92), the radial wall portion (144), the suction side wall (78), and the tip end wall (130) forming the tip plenum (134) along the tip end wall (130), the tip plenum (134) disposed radially outward of the rim (108) and the main body cavity (88, 88A, 88B), the tip plenum (134) connected in fluid communication with the main body cavity (88, 88A, 88B).

2. The blade of claim 1, wherein the main body cavity (88, 88A, 88B) is isolated from fluid communication with the pressure side wall passages (90).

3. The blade of claim 1 or 2, wherein the radial wall portion (144) forms a plurality of cooling holes (148) extending through the radial wall portion (144) from the tip plenum (134) to the pressure side surface (82).

4. The blade of claim 3, wherein the plurality of cooling holes (148) are arranged as a plurality of radial rows (150) of the plurality of cooling holes (148) on the radial wall portion (144).

5. The blade of any preceding claim, wherein the rim (108) forms a convex segment (110) further forming the tip plenum (134).

6. The blade of any preceding claim, wherein the interior wall segment (94) extends between and to an upstream end (112) and a downstream end (114), and the interior wall segment (94) forms the rim (108) from the upstream end (112) to the downstream end (114).

7. The blade of any preceding claim, wherein the tip end wall (130) forms a squealer pocket (154) on the tip end (70), and the squealer pocket (154) is connected in fluid communication with the tip plenum (134), optionally the tip end wall (130) forms at least one air passage (160) extending through the tip end wall (130) from the tip plenum (134) to the squealer pocket (154).

8. The blade of any preceding claim, wherein the radial wall portion (144) includes a plurality of flow augmentation features (164) projecting into the tip plenum (134).

9. The blade of any preceding claim, wherein the tip plenum (134) extends along the tip end wall (130) to an outlet (136) formed through the trailing edge (74).

10. The blade of claim 9, wherein the airfoil body (68) further forms a leading edge cavity (86) between the leading edge (72) and the main body cavity (88, 88A, 88B), the leading edge cavity (86) is connected in fluid communication with the tip plenum (134), and the tip plenum (134) extends along the tip end wall (130) from the leading edge cavity (86) to the outlet (136).

11. The blade of any preceding claim, wherein the radial wall portion (144) extends radially at least 0.100 inches (2.54 mm).

12. A gas turbine engine (22) comprising:
a turbine section (30) including a bladed turbine rotor (46) mounted for rotation about a rotational axis (40), the bladed turbine rotor (46) including a plurality of turbine blades (64), each turbine blade (64) according to any preceding claim.

13. A method for cooling a tip of an airfoil body (68) of a blade (64) of a gas turbine engine (22), the method comprising:
directing cooling air from a tip plenum (134) of the airfoil body (68) through a plurality of cooling holes (148) to an exterior of the airfoil body (68), the airfoil body (68) including a pressure side wall (76), a suction side wall (78), and a tip end wall (130), the pressure side wall (76) and the suction side wall (78) forming a main body cavity (88, 88A, 88B) therebetween, the pressure side wall (76) forming a plurality of pressure side wall passages (90), the suction side wall (78) forming a plurality of suction side wall passages (91), the pressure side wall passages (90) and the suction side wall passages (91) isolated from fluid communication with the main body cavity (88, 88A, 88B), the pressure side wall (76) including a radial wall portion (144) extending between the pressure side wall passages (90) and the tip end wall (130), the radial wall portion (144), the suction side wall (78), and the tip end wall (130) forming the tip plenum (134), the tip plenum (134) connected in fluid communication with the main body cavity (88, 88A, 88B), the radial wall portion (144) forming the plurality of cooling holes (148).

14. The method of claim 13, wherein the pressure side wall (76) forms a rim (108) at the main body cavity (88, 88A, 88B) and the tip plenum (134), the rim (108) includes a convex segment (110) projecting into and further forming the tip plenum (134), and the plurality of cooling holes (148) are disposed between the rim (108) and the tip end wall (130).

15. The method of claim 13 or 14, further comprising directing the cooling air from the tip plenum (134) to a squealer pocket (154) formed by the tip end wall (130) at a blade tip (70) of the blade (64).
